Europäisches Patentamt

European Patent Office

Office européen des brevets

(11) Publication number: **0 273 887**
**A2**

(12) **EUROPEAN PATENT APPLICATION**

(21) Application number: **87850368.9**

(22) Date of filing: **26.11.87**

(51) Int. Cl.⁴: **G 02 B 26/10**
**G 02 B 27/00**

(30) Priority: **29.12.86 SE 8605575**

(43) Date of publication of application:
**06.07.88 Bulletin 88/27**

(84) Designated Contracting States:
**CH DE FR GB LI NL SE**

(71) Applicant: **SARASTRO AB**
**Björnäsvägen 21**
**S-113 47 Stockholm (SE)**

(72) Inventor: **Carlsson, Kjell**
**Upplandsvägen 8**
**S-186 00 Vallentuna (SE)**

(74) Representative: **Omming, Allan**
**A. OMMING & CO. AB Sveavägen 28-30**
**S-111 34 Stockholm (SE)**

(54) **An arrangement in optical Instruments.**

(57) An arrangement for an optical instrument comprises two mirrors (11, 12) which co-act in illuminating an object or detecting light rays reflected by or emitted from the object. One mirror (11) is positioned adjacent the pupil of the instrument and the other (12) of the two mirrors is located in a position for directing transmitted light directly onto the first mentioned mirror (11) or a position for receiving directly light reflected by or emitted by the first mentioned mirror (11).

The arrangement may have the form of a scanning device, in which case the first mentioned mirror (11) rotates about an axis (13) which is perpendicular to the symmetry axis (15) of the instrument, and the other (12) of the mirrors is arranged to rotate about an axis (14) which is perpendicular to the first mentioned axis. The distance (R) between the two mutually intersecting axes (13, 14) is equal to the mean distance between the centres of respective mirrors.

The first mentioned mirror (11) moves at a frequency within the range of 25-50 Hz, whereas the other mirror (12) moves at a frequency within the range of 0.1-0.3 Hz.

EP 0 273 887 A2

Bundesdruckerei Berlin

# Description

An arrangement in optical instruments.

TECHNICAL FIELD

The present invention relates to an arrangement for use in an optical instrument and comprising two mirrors which co-act to illuminate an object and/or to detect light rays that are reflected or emitted from the object. One of the two mirrors is placed either adjacent the entrance pupil of the instrument or adjacent the exit pupil thereof.

BACKGROUND PRIOR ART

There are known to the art methods which enable a beam of parallel light rays to be deflected in two mutually different directions with the least possible translatory movement of the rays, when transmitting the beam through a pupil whose diameter is insignificantly larger than the diameter of the light beam.

One such known method involves the use of a single mirror which can be rotated about a point in the plane of the pupil. It has been found difficult to construct such an arrangement mechanically in practice. Furthermore, it is not possible at present to construct such an arrangement from standard components.

Another known method involves the use of two mirrors, namely one mirror which is located in the plane of the pupil and one mirror which is located at a distance therefrom. The plane of the pupil is reproduced on the mirror remote from the pupil, with the aid of a telecentrical lens system. This system is also found to be encumbered with drawbacks in practice, since the lens system must be of high quality and must be capable of functioning satisfactorily at wide aperture settings. This causes the system to be complicated and expensive and also results in a bulky system which requires much space. Furthermore, it is doubtful that such a system can be constructed from standard components.

SUMMARY OF THE INVENTION

In accordance with the concept of the present invention, the remaining mirror of said two mirrors of the optical arrangement is positioned so as to reflect a transmitted beam of light directly onto the first mentioned mirror placed in the pupil of the instrument or so as to receive directly light rays which are reflected by or emitted from said first mentioned mirror.

The inventive arrangement thus incorporates two mirrors which can be moved with the aid of standard components. A first of the mirrors is located in the plane of the pupil while the second mirror is located at a distance therefrom, although as close to the pupil plane as the mechanical construction of the arrangement will permit. The second mirror is caused to move in a manner which compensates essentially for the "erroneous" position of the mirror. The effect of the principally erroneous position of the mirror can be minimized by suitable selection of the axis about which the mirror rotates. The inventive arrangement offers a simple solution to the aforesaid problems, since the arrangement can be easily constructed at relatively low cost, requires only a small amount of space, and is free from optical reproduction errors.

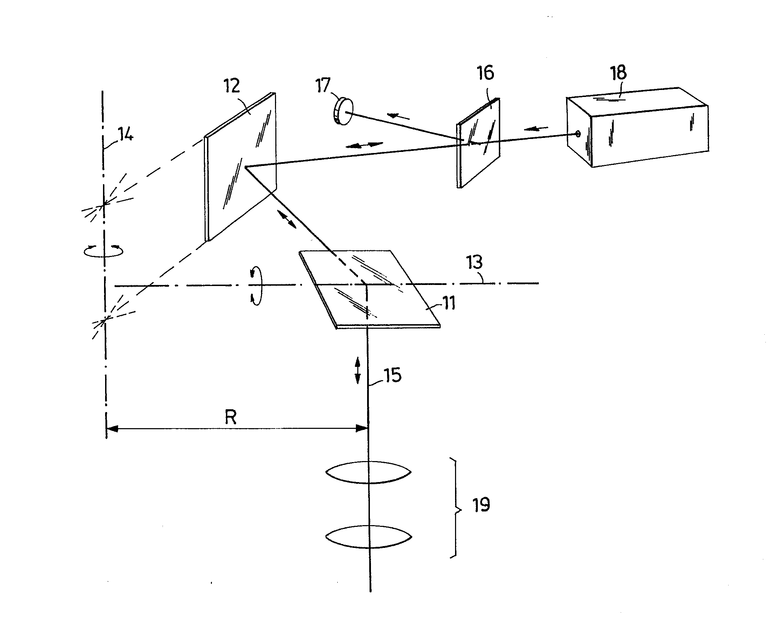

The invention will now be described in more detail with reference to the accompanying drawing, the single figure of which illustrates schematically a scanning device which is constructed in accordance with the invention and which is suitable for use in a microscope.

DESCRIPTION OF A PREFERRED EMBODIMENT

The illustrated arrangement comprises a first mirror 11 which is positioned adjacent the pupil of a microscope, i.e. above the ocular, and which can move about an axis 13 which extends essentially at right angles to the optical symmetry axis 15 of the instrument, and further comprises a second mirror 12 which is positioned to direct a transmitted beam of light directly onto the first mirror 11 and to receive directly light rays which are reflected by or emitted from said first mirror 11, this second mirror being arranged for movement about an axis 14 which extends essentially at right angles to the rotational axis 13 of the first mirror 11. The two mirrors and their respective rotational axes are positioned in relation to one another so that the distance R between the rotational axis of the second (remaining) mirror 12 and the optical symmetry axis 15 is substantially equal to the mean centre-distance between the two mirrors. The rotational axes shall also substantially intersect one another, by which is meant that the axes either actually intersect each other or in other cases extend closely by one another.

An arrangement according to the invention can be used to illuminate an object at one or more points on the surface thereof, and/or to detect the reflection or the emission of light from one or more points on the surface of the object. Selection of the point (points) on the object is effected through the medium of programmed rotation of respective mirrors about their axes. The first mirror 11 rotates rapidly and can be driven by a d.c. motor, thereby achieving continuous rotation of the mirror, and the angular position of the mirror is determined with the aid of a rotating decoder. Alternatively, the mirror 11 can be driven by means of a galvanometric moving coil, therewith engendering an oscillatory movement.

The second mirror 12 (slowly rotating) is driven conveniently by means of a stepping-motor or a galvanometric moving coil.

Practical experiments have shown that the first mirror 11 should preferably be rotated or oscillated at a frequency of from 1 to 1000 Hz, preferably within a frequency range of 25-50 Hz, whereas the second mirror 12 is preferably oscillated at a frequency of the order of 0.01-10 Hz, preferably within a frequency range of 0.1-0.3 Hz.

In order to obtain maximum illumination of an object there is conveniently used a laser beam which has a diameter equal to the pupil of the microscope, the laser beam being directed towards the pupil with good approximation, irrespective of the positions of the oscillating mirrors. This is illustrated schematically in the drawing. As shown in the drawing, a laser beam exiting from a laser source 18 is directed onto the mirror 12 and is relected thereby onto the mirror 11, which reflects the light rays, in turn, through the microscope optic and onto an object. The light rays reflected by the object are then reflected back along the same path and onto a semi-transparent mirror 16, which reflects the rays onto a deflector 17 for evaluation.

The arrangement can also be used for evaluating light rays which are emitted from the surface of an object through the microscope and onto the mirror 11 and the mirror 12 and from there directly to a detector. The laser source 18 is not required in this latter case.

In order to avoid any misunderstanding, it is emphasized that the axes 13 and 14 referred to in the aforegoing may be "tangible" axes, i.e. the axes in reality correspond to mechanical/electrical arrangements or devices which impart the aforesaid movement patterns to respective mirrors.

## Claims

1. An optical scanning device intended for use with an optical instrument and comprising first and second mirrors (11, 12), of which the first (11) of said mirrors is placed either in the entrance pupil or the exit pupil of the optical instrument and is arranged such as to move about an axis (13) which is substantially at right angles to the symmetry axis of the instrument, and of which mirrors (11, 12) the second mirror (12) is arranged such as to move about an axis (14) which is substantially at right angles to the rotational axis (13) of the first mirror (11), characterized in that the distance (R) between the rotational axis (14) of the second mirror (12) and the optical symmetry axis (15) is substantially equal to the mean centre-distance between the two mirrors; and in that the two rotational axes (13, 14) substantially intersect one another.

2. A scanning device according to Claim 1, characterized in that the first mirror (11) is arranged to oscillate or to rotate at a relatively high frequency in the order of magnitude 1-1000 Hz, preferably 25-50 Hz; and in that the second mirror (12) is arranged to oscillate at a relatively low frequency in the order of 0.01-10 Hz, preferably 0.1-0.3 Hz.

0273887